(19) Europäisches Patentamt / European Patent Office / Office européen des brevets

(11) **EP 2 747 332 B1**

(12) **EUROPEAN PATENT SPECIFICATION**

(45) Date of publication and mention
of the grant of the patent:
**21.03.2018 Bulletin 2018/12**

(51) Int Cl.:
*H04L 5/00* *(2006.01)*    *H04L 25/02* *(2006.01)*

(21) Application number: **12199250.7**

(22) Date of filing: **21.12.2012**

(54) **Mimo-ofdm channel estimation based on phase-offset pilot symbols**

MIMO-OFDM-Kanalschätzung auf Grundlage von Phasenverschiebungs-Pilotsymbolen

Estimation de canal MIMO-OFDM sur la base des symboles pilotes de déphasages

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietor: **Sun Patent Trust
New York, NY 10017 (US)**

(72) Inventor: **Klenner, Peter
63225 Langen (DE)**

(74) Representative: **Grünecker Patent- und
Rechtsanwälte
PartG mbB
Leopoldstraße 4
80802 München (DE)**

(56) References cited:
**EP-A1- 2 164 198**

**Description**

The present invention relates to a data transmission technique comprising pilot signals for improving data reception quality. In particular, it relates to a transmission technique which allows an improved estimation of the channel characteristics in a MIMO transmission system, preferably for the transmission of OFDM symbols.

In recent years, the demand for higher throughput in communication has steadily increased. Users demand for transfer of high volume of data requires the use of coding and transmission techniques which manage to make more efficient use of the transmission channel. One such technique is called Multiple Input Multiple Output, in the following MIMO.

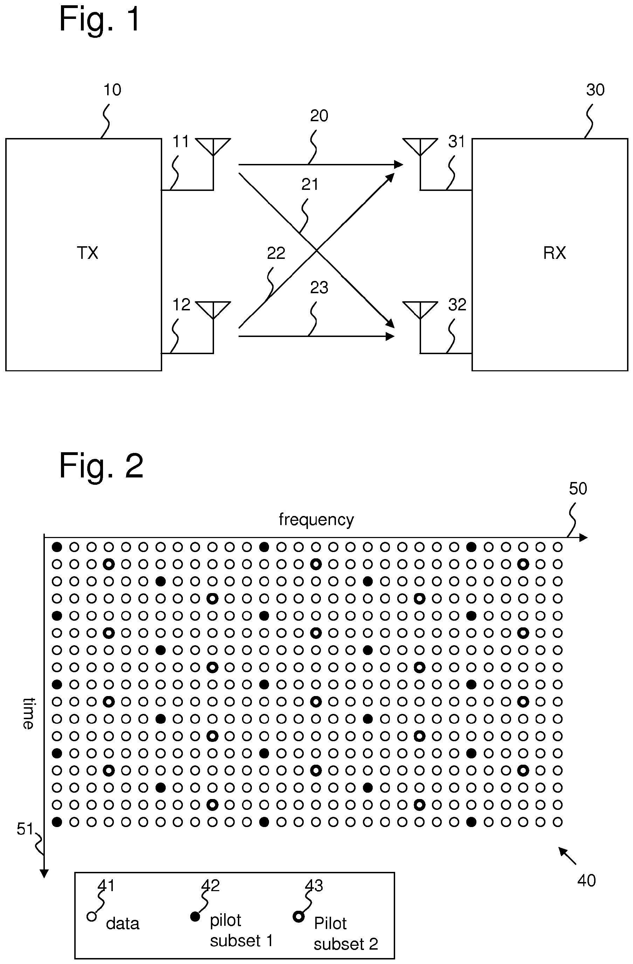

With reference to Figure 1 a MIMO transmission system is described. The exemplary MIMO system is a 2x2 system, that is, it is provided with 2-Input and 2-Output. In other words, the MIMO transmission system 1 includes: a transmitter 10 having two transmitting antennas 11 and 12; and a receiver 30 having two receiving antennas 31 and 32. The transmitter 10 transmits a first transmission signal and a second transmission signal from the first transmitting antenna 11 and the second transmitting antenna 12, respectively. The signal from first transmitting antenna 11 travels through channel 20 to first receiving antenna 31 as well as travelling through channel 21 to second receiving antenna 32. Similarly, the signal from second transmitting antenna 12 travels through channel 22 to first receiving antenna 31 as well as travelling through channel 23 to second receiving antenna 32. That is, the combination of the two transmitting antennas 11 and 12, together with the two receiving antennas 31 and 32 results in four channels 20-23, each having its own transmission characteristics.

When an Orthogonal frequency-division multiplexing (in the following, OFDM) encoding scheme is employed, a large number of mutually orthogonal carriers are modulated with digital data to be transmitted and the resulting modulated waves are multiplexed and transmitted. With an increase in the number of carriers used, the symbol duration increases as compared with a single-carrier transmission method at the same transmission rate. This makes the OFDM transmission more robust to the effect of multi-path propagation. In OFDM, in addition, a guard interval is inserted between adjacent symbols to avoid the inter-symbol interference that multi-path propagation would cause.

In one scheme employed widely for the equalization, pilot signals (of which phase and amplitude are known to the receiver) are transmitted in some of the cells (i.e., the transmission units identified by combinations of the symbol number and the carrier number) contained in an OFDM signal. The receiver estimates the channel characteristics of each of channels 20-23 by using the pilot signals and equalizes the received signal by using the estimated channel characteristics.

In the simpler case of a SISO transmission system, the channel estimation system is done in the following manner.

A signal $x_{k,n}$ is sent, in the frequency domain, by a transmitter to a receiver. Here "k" represents the subcarrier index and "n" represents the OFDM symbol index. The signal $x_{k,n}$ is weighted by channel coefficient $H_{k,n}$ and therefore, at the receiver a signal $y_{k,n}$ is received which corresponds to

$$\text{(Eq. 1)} \quad y_{k,n} = x_{k,n} \cdot H_{k,n}$$

In the case of presence of noise on the channel, the noise can be represented by $\eta_{k,n}$, which can be, for instance, a Additive white Gaussian noise (in the following AWGN), thereby resulting into a received signal $y_{k,n}$ which corresponds to

$$\text{(Eq. 2)} \quad y_{k,n} = x_{k,n} \cdot H_{k,n} + \eta_{k,n}$$

Here, since the signals $x_{k,n}$ and $y_{k,n}$ are defined in the frequency domain, the channel frequency response $H_{k,n}$ is also represented in the frequency domain. In particular, the frequency response $H_{k,n}$ corresponds to the Fast Fourier Transform (in the following FFT) of the channel impulse $h_n$, that is

$$\text{(Eq. 3)} \quad H_{k,n} = F_k h_n = \sum_l [h_n]_l \cdot e^{-j2\pi lk/N}$$

where $F_k$ represents the k-th row of the DFT matrix.

In order to estimate the channel impulse response $h[n]$ in a minimum mean square error sense, the Wiener-Hopf equation can be used. That is,

$$\text{(Eq. 4)} \quad W^H = \arg\min_{\tilde{W}^H} E\left\{\left|h[n] - \tilde{W}^H y_p\right|^2\right\} = E\left\{h[n]y_p^H\right\}\left(E\left\{y_p y_p^H\right\}\right)^{-1}$$

wherein $y_p$ is a vector containing all received pilot symbols within an OFDM frame. Note, that the fully fledged two-dimensional interpolation is usually replaced by applying twice a one dimensional interpolation, separately done in the frequency and time direction.

For instance, for the case of the n-th OFDM symbol, the received pilot cells of the n-th OFDM symbol are inserted in vector $y_p$ as

$$\text{(Eq. 5)} \quad y_p[n] = X_p[n]F_p h[n] + \eta_p[n]$$

in which case the Wiener filter reads

$$\text{(Eq. 6)} \quad W^H = \Phi_h F_p^H X_p^H \left(X_p F_p \Phi_h F_p^H X_p^H + \sigma_\eta^2 I\right)^{-1}$$

the channel estimation can then by obtained by matrix multiplication such as

$$\text{(Eq. 7)} \quad \hat{h}[n] = W^H y_p[n]$$

whereas the corresponding frequency response for all subcarriers can be obtained by a frequency interpolation such as

$$\text{(Eq. 8)} \quad \hat{H}[n] = F\hat{h}[n] \, .$$

Note, that the optimal Wiener filter contains knowledge about the channel statistics, that is the power delay profile $\Phi_h$, which is not always available at the receiver. A feasible realization of the Wiener filter is obtained by assuming a uniform power delay profile with delay spread equal to the guard interval.

EP 2 164 198 discloses a transmitter transmitting signals in a MIMO system wherein the signal transmitted by the antennas of the transmitter is created such that there is a phase difference between a phase of each pilot signal and a phase of a reference pilot signal.

This approach has to be changed when a MIMO system is used. That is, the phases and amplitudes of cells of different transmit antennas are interfering at individual receive antennas, so that the receiver needs to compensate (equalize) the superposition of channel coefficients from each transmit antenna.

The present invention relates to this problem and provides an efficient way of selecting pilot symbols such that the receiver can carry out a channel estimation of a plurality of channels. This is achieved by the teaching of the independent claims. Further advantageous aspects of the invention are defined in the dependent claims.

In particular, an embodiment of the invention can relate to a transmitter having a plurality M of antennas for transmitting a plurality of OFDM symbols, wherein the OFDM symbols comprise a plurality of pilot symbols which are used at a receiver in order to estimate channel characteristics, and wherein the plurality M of antennas comprise at least a first and a second antenna and the pilot symbol transmitted by the second antenna have a phase offset with respect to the pilot symbol transmitted by the first antenna.

In some embodiments, the pilot symbol transmitted by the second antenna can have a phase offset with respect to the same pilot symbol transmitted by the first antenna.

In some embodiments, the pilot symbol transmitted by the first antenna can be obtained by

$$X_P^0[n] = diag\left\{\exp(j\varphi_0[n]) \cdot \exp(-j2\pi k_P[n]t_0[n]/K)\right\}$$ and the pilot symbol transmitted by the second antenna can be obtained by $X_P^1[n] = diag\left\{\exp(j\varphi_1[n]) \cdot \exp(-j2\pi k_P[n](t_0[n] + K_{offset})/K)\right\}$ wherein $k_P(n)$ can be a vector with indices of pilot cells in the n-th OFDM symbols, $t_0[n]$ can be a phase offset in the range [0, K-1], $K_{offset}$ can be a free parameter, $K$ can be the number of subcarriers, and $\varphi_0, \varphi_1$ can be uniformly distributed phases in the range [0, $2\pi$].

In some embodiments, $K_{offset}$ can be equal to or larger than the guard interval length.

A further embodiment of the present invention can further relate to a receiver for receiving at least one OFDM pilot symbol which was transmitted by a transmitter according to the embodiments above, wherein channel estimation is obtained via a frequency interpolation only.

A further embodiment of the present invention can further relate to a transmission system comprising the transmitter of any of the above embodiments and the receiver of the above embodiment.

A further embodiment of the present invention can relate to a transmission method for transmitting a plurality of OFDM symbols by means a plurality of M antennas, wherein the OFDM symbols comprise a plurality of pilot symbols which are used at a receiver in order to estimate channel characteristics, and wherein the plurality M of antennas comprise at least a first and a second antenna and the pilot symbol transmitted by the second antenna has a frequency offset with respect to the pilot symbol transmitted by the first antenna.

In some embodiments, the pilot symbol transmitted by the second antenna can have a frequency offset with respect to the same pilot symbol transmitted by the first antenna.

In some embodiments, the pilot symbol transmitted by the first antenna can be obtained by

$$X_P^0[n] = diag\left\{ \exp(j\varphi_0[n]) \cdot \exp(-j2\pi k_P[n]t_0[n]/K) \right\}$$ and the pilot symbol transmitted by the second antenna can be obtained by $X_P^1[n] = diag\left\{ \exp(j\varphi_1[n]) \cdot \exp(-j2\pi k_P[n](t_0[n] + K_{offset})/K) \right\}$ wherein $k_P(n)$ can be a vector with indices of pilot cells in the n-th OFDM symbols, $t_0(n)$ can be a phase offset in the range [0, K-1], $K_{offset}$ can be a free parameter, $K$ can be the number of subcarriers, and $\varphi_0, \varphi_1$ can uniformly distributed phases in the range [0, $2\pi$].

In some embodiments, $K_{offset}$ can be equal to or larger than the guard interval length.

An embodiment of the present invention can further relate to a reception method for receiving at least one OFDM pilot symbol which was transmitted by the transmission method according to above embodiment, wherein channel estimation is obtained via a frequency interpolation only.

The invention will be described in more detail by way of example hereinafter using advantageous embodiments and with reference to the drawings. The described embodiments are only possible configurations in which the individual features may, however, as described above, be implemented independently of each other or may be omitted. Equal elements illustrated in the drawings are provided with equal reference signs. Parts of the description relating to equal elements illustrated in the different drawings may be left out. In the drawings:

Figure 1 schematically illustrates a MIMO system;

Figure 2 schematically illustrates a time-frequency distribution of pilot symbols; and

Figures 3 and 4 schematically illustrate the interpolation steps of a channel estimation based on the pilot symbols distributed in accordance with Figure 2.

In a MIMO system such as the one illustrated in Figure 1, the signal received at a receiving antenna, such as antenna 31, can be expressed as

$$(\text{Eu. 9}) \quad y_{k,n} = H_{k,n}^0 x_{k,n}^0 + H_{k,n}^1 x_{k,n}^1 + \eta_{k,n}$$

by defining $H_{k,n}^0$ as the channel characteristic of a first transmission channel, such as channel 20 and $H_{k,n}^1$ as the channel characteristic of a second transmission channel, such as channel 21, while $x_{k,n}^0$ and $x_{k,n}^1$ are the signals transmitted by transmitting antennas 11 and 12 respectively. That is, the received signal $y_{k,n}$ is a result of the overlapping of two elements, namely $H_{k,n}^0 x_{k,n}^0$ and $H_{k,n}^1 x_{k,n}^1$ (in addition to noise $\eta_{k,n}$). Thus, in order to apply a channel estimation method along the lines of the one described above for a SISO system, in a MIMO system the pilot signals are generally grouped as illustrated in Fig. 2.

In particular, in Fig. 2 an illustration is provided of a frequency-time plane comprising a plurality of cells 40 arranged along a frequency axis 50 and a time axis 51. Some of the cells 40 are data cells 41, while some of them are either a pilot subset 1, as indicated by reference numeral 42, or a pilot subset 2, as indicated by reference numeral 43.

Each cell of the two pilot subsets 42 and 43 is actually resulting from the superposition of the signal $x_{k,n}^0$ and

$x_{k,n}^1$ as described above. In order to allow the receiver 30 to estimate both channels $H_{k,n}^0$ and $H_{k,n}^1$, the two pilot subsets are modulated as

$$\text{(Eq. 10) Pilot symbol subset 1: } x_{k,n}^0 = +x_{k,n}^1 = 1$$

$$\text{(Eq. 11) Pilot symbol subset 2: } x_{k,n}^0 = -x_{k,n}^1 = 1$$

In other words, the pilot signals $x_{k,n}^1$ transmitted from the second transmitting antenna 12 in one symbol are alternately inverted and not inverted in polarity, with respect to the pilot signals $x_{k,n}^0$ transmitted from the first transmitting antenna 11 in the same symbol. The distances between pilot subsets 1 and 2 in Fig. 2 are only provided as an example and they could be changed, while still retaining the above described CDMA-like modulation.

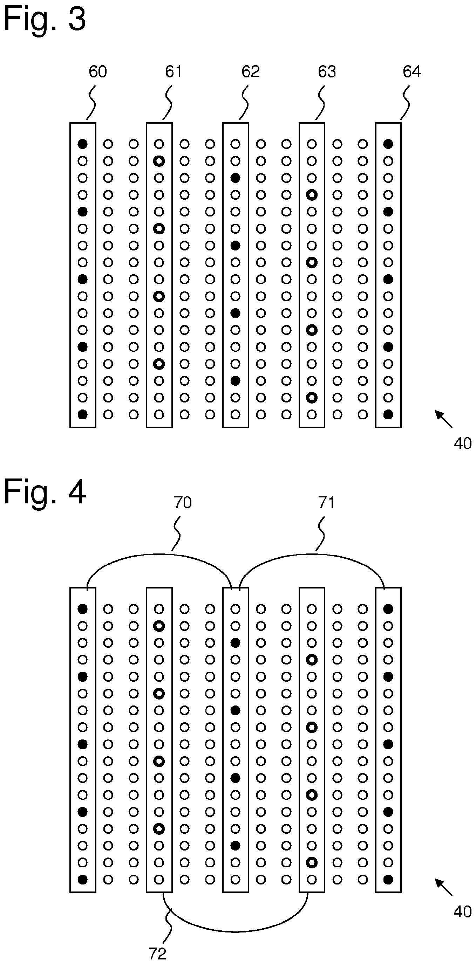

Due to this construction, it is possible to estimate the channel frequency response $\hat{H}_{k,n}^0$ and $\hat{H}_{k,n}^0$ as described with reference to Figures 3 and 4.

In particular, a channel estimation value $\hat{H}_{k,n}^+$ and $\hat{H}_{k,n}^-$ being, respectively, the channel estimation obtained from the pilot symbol subset 1 and 2, can be obtained. In other words, as discussed above, the channel estimation can be carried out for the received symbol where, in the case of subset 1, the received symbol $y_{k,n}$ will correspond to the sum $H_{k,n}^0 x_{k,n}^0 + H_{k,n}^1 x_{k,n}^1$ while, in the case of subset 2, the received symbol will correspond to the difference $H_{k,n}^0 x_{k,n}^0 - H_{k,n}^1 x_{k,n}^1$. These two channel estimation values will, respectively, be referred to as $\hat{H}_{k,n}^+$ and $\hat{H}_{k,n}^-$.

As illustrated in Figure 3, the channel estimation value $\hat{H}_{k,n}^+$ is first interpolated in the time direction, along an interpolation region 60, 62, 64, etc. Similarly the channel estimation value $\hat{H}_{k,n}^-$ is first interpolated in the time direction, along an interpolation region 61, 63, etc. This provides an interpolated value $\hat{H}_{k,n}^+$ for cell elements 40 in region 60, 62, 64, etc as well as an interpolated value $\hat{H}_{k,n}^-$ for cell elements 40 in region 61, 63, etc. Subsequently, as illustrated in Figure 4, the values $\hat{H}_{k,n}^+$ and $\hat{H}_{k,n}^-$ are interpolated along the frequency direction. That is, based on the results obtained by the time interpolation of Figure 3, the frequency interpolation for value $\hat{H}_{k,n}^+$ for cell elements 40 between regions 60 and 62 is carried out as schematically indicated by line 70. Simlarly, the frequency interpolation for value $\hat{H}_{k,n}^+$ for cell elements 40 between regions 62 and 64 is carried out as schematically indicated by line 71. In a corresponding manner, value $\hat{H}_{k,n}^-$ for cell elements 40 between regions 61 and 63 is carried out by schematically indicated by line 73. It will be clear that, in the process of both Figures 3 and 4, in addition to interpolation it is necessary, when the extreme points are not known, to extrapolate data. Fro instance this is the case of value $\hat{H}_{k,n}^-$ for cells elements 40 outside of regions enclosed by line 72, for instance regions 60 and 64.

Once then values $\hat{H}_{k,n}^+$ and $\hat{H}_{k,n}^-$ have been interpolated, for a given cell element 40, the estimation of each of the channel response $\hat{H}_{k,n}^0$ and $\hat{H}_{k,n}^0$ can be obtained by

$$\text{(Eq. 12) } \hat{H}_{k,n}^0 = \frac{1}{2}\left(\hat{H}_{k,n}^+ + \hat{H}_{k,n}^-\right)$$

$$\text{(Eq. 13)} \quad \hat{H}^1_{k,n} = \frac{1}{2}\left(\hat{H}^+_{k,n} - \hat{H}^-_{k,n}\right)$$

However, this is not ideal since it always requires the above described steps to be carried out in two dimensions. In particular, there are two sides to a scattered pilot pattern. On one hand, by means of interpolation in time, the density of pilots in frequency direction can be artificially increased. This is beneficial for slow fading. On the other hand, within a given scattered pilot pattern, there exist cells close to the edge of the OFDM time-frequency grid, where extrapolation in time direction is required in order to obtain the channel. This is detrimental in fast fading. Thus, the currently employed pilot patterns always need interpolation in time.

On the other hand, it is preferable to provide a method which achieves a channel estimation without such requirement. In particular, according to an embodiment of the present invention, the channel estimation process can be improved by separating the pilot symbols of different antennas by means of a phase offset. In this manner, the embodiment does not need time interpolation, so it is applicable in both slow and fast fading. Furthermore, the embodiment provides the additional advantage that in slow fading one might choose to do interpolation in time nonetheless, which is facilitated by means of the two phases $\varphi_0[n]$ and $\varphi_1[n]$, which will be described below.

More specifically, the pilot symbols of the n-th OFDM symbol as received at receiver 30 can be represented as a vector such as

$$\text{(Eq. 14)} \quad y_P[n] = X^0_P[n]F_P h^0[n] + X^1_P[n]F_P h^1[n] + \eta_P[n]$$

which, when reformulated into a matrix-vector form can be expressed such as

$$\text{(Eq. 15)} \quad y_P[n] = \underbrace{\left[X^0_P[n]F_P, X^1_P[n]F_P\right]}_{G} \cdot \begin{bmatrix} h^0[n] \\ h^1[n] \end{bmatrix} + \eta_P[n]$$

As can be seen from the matrix formulation, the pilot symbols $X^0_P[n]$ and $X^1_P[n]$ will influence the rank and the condition number of the matrix $G$. In this respect, they therefore determine how well the matrix can be inverted and how precise the corresponding channel estimate quality will be. In other words, since the DFT submatrix $F_P$ is multiplied by the pilot symbols $X^0_P[n]$ and $X^1_P[n]$ , the values of the $X^0_P[n]$ and $X^1_P[n]$ can be chosen such that they apply a phase offset to the columns of $F_P$. In particular, values for the pilot symbols $X^0_P[n]$ and $X^1_P[n]$ are selected such that the full rank of matrix $G$ can be guaranteed. This is achieved by selecting the pilot symbols

$$\text{(Eq. 16)} \quad X^0_P[n] = diag\left\{\exp(j\varphi_0[n]) \cdot \exp(-j2\pi k_P[n]t_0[n]/K)\right\}$$

$$\text{(Eq. 17)} \quad X^1_P[n] = diag\left\{\exp(j\varphi_1[n]) \cdot \exp(-j2\pi k_P[n](t_0[n]+K_{offset})/K)\right\}$$

In particular, the parameters for the two equations above are selected in the following manner:

$k_P[n]$ is a vector with indices of pilot cells in the n-th OFDM symbols

$t_0[n]$ is the phase offset in the range [0, K-1]

$K_{offset}$ is a free parameter designed to ensure full rank of matrix $G$, in some embodiments this may be chosen identical to the guard interval length. In general, it can be sufficient to choose $K_{offset} >= K_g$, that is, the guard interval length, so as to ensure full rank of $G$.

$K$ is the number of subcarriers

$\varphi_0[n], \varphi_1[n]$ are uniformly distributed phases in the range $[0, 2\pi]$.

As will be described below, the two phases can be used to estimate the channel in time-direction. More specifically, $\varphi_0[n], \varphi_1[n]$ allow the interpolation in the time domain as will be described below with reference to (Eq. 26), since choosing the two phases randomly gives full rank to the matrix $X_S[k]$ and thus allows channel estimation in time direction. Additionally, the two phases $\varphi_0[n], \varphi_1[n]$ can be used to increase the pilot-density in frequency direction since two phases are part of the pilot symbols $X_P^0[n]$ and $X_P^1[n]$ and enter the matrix $G$, so they are intrinsic to the frequency interpolation, namely the filter matrices $W_0^H$ and $W_1^H$ in (Eq. 18) and (Eq. 19) below.

For instance, in the case of two transmitting antennas and one receiving antenna, the pilot symbols $X_P^0[n]$ and $X_P^1[n]$ will have, by considering $t_0 = 0$, $K_{offset} = K_g$ and $K_g$ = guard interval period, and assuming pilot spacing 12 as, e.g., in scattered pilot pattern PP0, the following values:

$$X_P^0[n] = \exp(j\varphi_0[n]) \cdot diag\{1, 1, 1, ...\}$$

$$X_P^1[n] = \exp(j\varphi_1[n]) \cdot diag\{1, \exp(-j2\pi 12 K_g / K), \exp(-j2\pi 24 K_g / K), ...\}$$

While for the m-th antenna:

$$X_P^m[n] = \exp(j\varphi_m[n]) \cdot diag\{1, \exp(-j2\pi 12 \cdot m \cdot K_g / K), \exp(-j2\pi 24 \cdot m \cdot K_g / K), ...\}$$

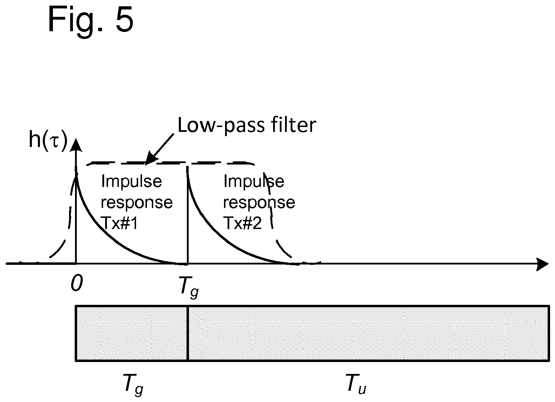

Thanks to this approach, channel estimation can be improved.
In particular, as discussed above, for the currently employed pilot symbols in standards like DVB-T2 or DVB-NGH interpolation in time is required. This entails extrapolation in certain instances, thereby, increasing the estimation error, and requires more RAM to save a sequence of OFDM symbols from which to perform two-dimensional interpolation. On the other hand, with the proposed pilots scheme in the embodiment above, frequency interpolation only is feasible, saving the need to hold a sequence of OFDM symbols and thereby saving memory. Furthermore, extrapolation in time direction is not necessary, which is beneficial for a smaller estimation error.
With the proposed pilots the impulse responses of, for instance, two transmit antennas can be positioned such that they form a single compound impulse response which can be interpolated by a low-pass filter, such as illustrated in Figure 5, with a passband accommodating both impulse response with fewer number of operations and less complexity with respect to the prior art solutions. In particular, Figure 5 illustrates the two impulse responses from the two transmitting antennas as Impulse response Tx#1 and Impulse response Tx#2, where the Impulse response Tx#2 is at a distance $T_g$ from Impulse response Tx#1 and where $T_u$ is the useful OFDM symbol duration. Here, by useful symbol duration $T_u$ it is intended the time duration of the symbol which is not included in the guard interval. In other words, a single OFDM symbol is transmitted over the time $T_g + T_u$. As can be seen, this allows a single Low-pass filter to incorporate both impulse responses, which results in a simpler interpolation with reduced number of operations and less complexity.
In the following, the main operations carried out at the receiver 30 will be described.
For instance, in the case of two transmitting antennas 11 and 12, the Wiener filter matrices for estimating the channel impulse response to a first and second transmit antenna read

$$\text{(Eq. 18)} \quad W_0^H = \Phi_{h_0} F_P^H X_0^H \left(G\Phi_h G^H + \sigma_\eta^2 I\right)^{-1}$$

$$\text{(Eq. 19)} \quad W_1^H = \Phi_{h_1} F_P^H X_1^H \left(G\Phi_h G^H + \sigma_\eta^2 I\right)^{-1}$$

wherein

$W_m^H$ is the filter matrix to estimate the channel impulse response to the m-th transmit antenna,

$\Phi_{h_m} = E\{h_m h_m^H\}$ is the covariance of the channel impulse response to the m-th transmit antenna,

$\Phi_h = E\{\begin{bmatrix} h_0 \\ \vdots \\ h_{M-1} \end{bmatrix} \begin{bmatrix} h_0^H & \cdots & h_{M-1}^H \end{bmatrix}\}$ is the compound covariance matrix for all impulse responses,

$\sigma_\eta^2$ is the noise power, and

*I* is the identity matrix

The channel estimation can then by obtained by matrix multiplication such as

$$(\text{Eq. 20}) \quad \hat{h}_0[n] = W_0^H y_p[n]$$

$$(\text{Eq. 21}) \quad \hat{h}_1[n] = W_1^H y_p[n]$$

whereas the corresponding frequency response for all subcarriers can be obtained by a frequency interpolation such as

$$(\text{Eq. 22}) \quad \hat{H}_0[n] = F\hat{h}_0[n].$$

$$(\text{Eq. 23}) \quad \hat{H}_1[n] = F\hat{h}_1[n].$$

For the m-th transmit antenna the filter matrix reads $(\text{Eq. 24}) \quad W_m^H = \Phi_{h_m} F_P^H X_m^H \left(G\Phi_h G^H + \sigma_\eta^2 I\right)^{-1}$ and the frequency response is then estimated as

$$(\text{Eq. 25}) \quad \hat{H}_m[n] = FW_m^H y_p[n]$$

Thus, as can be seen, a channel estimation can be achieved via a frequency interpolation only, as opposed to the above described case, in which both a time and frequency operation were needed.
For the case, that in addition to frequency interpolation, time interpolation is used the procedure is as follows. Assuming that the channel is constant over an OFDM frame, then on the k-th subcarrier the received pilot cells read

$$(\text{Eq. 26}) \quad R_S[k] = X_S[k]\begin{bmatrix} H_0[k] \\ H_1[k] \end{bmatrix} + \eta_S[k]$$

thus the channel coefficients for the first and second transmit antenna are estimated by

$$(\text{Eq. 27}) \quad \begin{bmatrix} \hat{H}_0[k] \\ \hat{H}_1[k] \end{bmatrix} = X_S^H[k]\left(X_S[k]X_S^H[k] + \sigma_\eta^2 I\right)^{-1} R_S[k]$$

With this time-interpolated channel estimates, (Eq. 15) can be extended to

$$\text{(Eq. 28)} \quad \begin{bmatrix} y_P[n] \\ \hat{H}_0[k] \end{bmatrix} = \underbrace{\begin{bmatrix} X_P^0[n]F_P & X_P^1[n]F_P \\ F_S & 0 \end{bmatrix}}_{G_0} \cdot \begin{bmatrix} h^0[n] \\ h^1[n] \end{bmatrix} + \begin{bmatrix} \eta_P[n] \\ \eta_S[n] \end{bmatrix}$$

The filter matrix to estimate the channel impulse response to the first transmit antenna then reads

$$\text{(Eq. 29)} \quad W_0^H = \Phi_{h_0} \begin{bmatrix} F_P^H X_0^H & F_S \end{bmatrix} \left( G_0 \Phi_h G_0^H + \sigma_\eta^2 I \right)^{-1}$$

And the channel estimate is obtained as

$$\text{(Eq. 30)} \quad \hat{h}_0[n] = W_0^H \begin{bmatrix} y_P[n] \\ \hat{H}_0[k] \end{bmatrix}$$

Although the above embodiments have been formalized in functional terms, it will be clear to those skilled in the art of telecommunication technology that the present invention can be carried out as a method, as well as implemented by an apparatus. In particular, however not limited thereto, it will be clear to the person skilled in the art how such embodiments can be implemented in an ASIC, a multi-purpose semiconductor processor, a FPGA or other semiconductor circuits.

**Claims**

1.  A transmitter (10) having a plurality M of antennas for transmitting a plurality of OFDM symbols, wherein the OFDM symbols comprise a plurality of pilot symbols (42, 43) which are used at a receiver in order to estimate channel characteristics, and wherein the plurality M of antennas comprise at least a first and a second antenna (11, 12) and the pilot symbol transmitted by the second antenna have a phase offset with respect to the pilot symbol transmitted by the first antenna. **characterized in that** the pilot symbol transmitted by the first antenna is obtained by

$$X_P^0[n] = diag\left\{ \exp(j\varphi_0[n]) \cdot \exp(-j2\pi k_P[n]t_0[n]/K) \right\}$$

and the pilot symbol transmitted by the second antenna is obtained by

$$X_P^1[n] = diag\left\{ \exp(j\varphi_1[n]) \cdot \exp(-j2\pi k_P[n](t_0[n] + K_{offset})/K) \right\}$$

wherein $k_P(n)$ is a vector with indices of pilot cells in the n-th OFDM symbols, $t_0[n]$ is a phase offset in the range [0, K-1], $K_{offset}$ is a free parameter, $K$ is the number of subcarriers, and $\varphi_0, \varphi_1$ are uniformly distributed phases in the range [0, $2\pi$].

2.  The transmitter according to claim 1 wherein $K_{offset}$ is equal to or larger than the guard interval length.

3.  A receiver (30) for receiving at least one OFDM pilot symbol (42, 43), **characterized in that** the pilot symbol is transmitted by at least two antennas (11, 12) and the pilot symbol transmitted by the first antenna is obtained by

$$X_P^0[n] = diag\left\{ \exp(j\varphi_0[n]) \cdot \exp(-j2\pi k_P[n]t_0[n]/K) \right\}$$

and the pilot symbol transmitted by the second antenna is obtained by

$$X_P^1[n] = diag\left\{\exp(j\varphi_1[n]) \cdot \exp(-j2\pi k_P[n](t_0[n] + K_{offset})/K)\right\}$$

wherein $k_P(n)$ is a vector with indices of pilot cells in the n-th OFDM symbols, $t_0[n]$ is a phase offset in the range [0, K-1], $K_{offset}$ is a free parameter, $K$ is the number of subcarriers, and $\varphi_0, \varphi_1$ are uniformly distributed phases in the range [0, $2\pi$], and wherein the receiver is configured to compute a channel estimation via a frequency interpolation only.

4. A transmission system comprising the transmitter of any of claims 1 or 2 and the receiver of claim 3.

5. A transmission method for transmitting a plurality of OFDM symbols by means a plurality of M antennas, wherein the OFDM symbols comprise a plurality of pilot symbols (42, 43) which are used at a receiver in order to estimate channel characteristics, and

wherein the plurality M of antennas comprise at least a first and a second antenna (11, 12) and the pilot symbol transmitted by the second antenna has a frequency offset with respect to the pilot symbol transmitted by the first antenna

**characterized in that**

the pilot symbol transmitted by the first antenna is obtained by

$$X_P^0[n] = diag\left\{\exp(j\varphi_0[n]) \cdot \exp(-j2\pi k_P[n]t_0[n]/K)\right\}$$

and the pilot symbol transmitted by the second antenna is obtained by

$$X_P^1[n] = diag\left\{\exp(j\varphi_1[n]) \cdot \exp(-j2\pi k_P[n](t_0[n] + K_{offset})/K)\right\}$$

wherein $k_P(n)$ is a vector with indices of pilot cells in the n-th OFDM symbols, $t_0(n)$ is a phase offset in the range [0, K-1], $K_{offset}$ is a free *parameter, K* is the number of subcarriers, and $\varphi_0, \varphi_1$ are uniformly distributed phases in the range [0, $2\pi$].

6. The transmission method according to claim 5 wherein $K_{offset}$ is equal to or larger than the guard interval length.

7. A reception method for receiving at least one OFDM pilot symbol (42, 43) **characterized in that** the pilot symbol is transmitted by at least two antennas (11, 12) and the pilot symbol transmitted by the first antenna is obtained by

$$X_P^0[n] = diag\left\{\exp(j\varphi_0[n]) \cdot \exp(-j2\pi k_P[n]t_0[n]/K)\right\}$$

and the pilot symbol transmitted by the second antenna is obtained by

$$X_P^1[n] = diag\left\{\exp(j\varphi_1[n]) \cdot \exp(-j2\pi k_P[n](t_0[n] + K_{offset})/K)\right\}$$

wherein $k_P(n)$ is a vector with indices of pilot cells in the n-th OFDM symbols, $t_0[n]$ is a phase offset in the range [0, K-1], $K_{offset}$ is a free parameter, $K$ is the number of subcarriers, and $\varphi_0, \varphi_1$ are uniformly distributed phases in the range [0, $2\pi$], and wherein the reception method comprises a channel estimation step wherein channel estimation is obtained via a frequency interpolation only.

**Patentansprüche**

1. Sender (10) mit einer Vielzahl M von Antennen zum Senden einer Vielzahl von OFDM-Symbolen, wobei die OFDM-Symbole eine Vielzahl von Pilotsymbolen (42, 43) umfassen, die an einem Empfänger verwendet werden, um Kanaleigenschaften zu schätzen, und wobei die Vielzahl M von Antennen mindestens eine erste und eine zweite Antenne (11, 12) umfassen und die von der zweiten Antenne gesendeten Pilotsymbole eine Phase aufweisen, die bezüglich des Pilotsymbol, das von der ersten Antenne gesendet wird, verschoben ist,
**dadurch gekennzeichnet, dass**
das von der ersten Antenne gesendete Pilotsymbol erhalten wird durch

$$X_p^0[n] = diag\{\exp\left(j\varphi_0[n]\right) \cdot \exp\left(-\mathrm{j}2\pi k_p[n]t_0[n]/K\right)\}$$

und das von der zweiten Antenne gesendete Pilotsymbol erhalten wird durch

$$X_p^1[n] = diag\{\exp\left(j\varphi_1[n]\right) \cdot \exp\left(-j2\pi k_p[n](t_0[n] + K_{offset}/K)\right)\}$$

wobei $k_p(n)$ ein Vektor mit Indices von Pilotzellen in den n-ten Pilotsymbolen ist, $t_0[n]$ eine Phasenverschiebung im Bereich [0, K-1] ist, $K_{offset}$ ein freier Parameter ist, $K$ die Anzahl von Unterträgern ist und $\varphi_0, \varphi_1$ gleichmäßig verteilte Phasen im Bereich [0, $2\pi$] sind.

2. Sender nach Anspruch 1, wobei $K_{offset}$ gleich oder größer als die Schutzintervalllänge ist.

3. Empfänger (30) zum Empfangen von mindestens einem OFDM-Pilotsymbol (42, 43), **dadurch gekennzeichnet, dass** das Pilotsymbol von mindestens zwei Antennen (11, 12) gesendet wird, und das von der ersten Antenne gesendete Pilotsymbol erhalten wird durch

$$X_p^0[n] = diag\{\exp\left(j\varphi_0[n]\right) \cdot \exp\left(-\mathrm{j}2\pi k_p[n]t_0[n]/K\right)\}$$

und das von der zweiten Antenne gesendete Pilotsymbol erhalten wird durch

$$X_p^1[n] = diag\{\exp\left(j\varphi_1[n]\right) \cdot \exp\left(-j2\pi k_p[n](t_0[n] + K_{offset}/K)\right)\}$$

wobei $k_p(n)$ ein Vektor mit Indices von Pilotzellen in den n-ten Pilotsymbolen ist, $t_0[n]$ eine Phasenverschiebung im Bereich [0, K-1] ist, $K_{offset}$ ein freier Parameter ist, $K$ die Anzahl von Unterträgern ist und $\varphi_0, \varphi_1$ gleichmäßig verteilte Phasen im Bereich [0, $2\pi$] sind, und
wobei der Empfänger dazu konfiguriert ist, eine Kanalschätzung nur über eine Frequenzinterpolation zu berechnen.

4. Sendesystem, umfassend den Sender nach einem der Ansprüche 1 oder 2 und den Empfänger nach Anspruch 3.

5. Sendeverfahren zum Senden einer Vielzahl von OFDM-Symbolen mithilfe einer Vielzahl von M Antennen,
wobei die OFDM-Symbole eine Vielzahl von Pilotsymbolen (42, 43) umfassen, die an einem Empfänger verwendet werden, um Kanaleigenschaften zu schätzen, und
wobei die Vielzahl M von Antennen mindestens eine erste und eine zweite Antenne (11, 12) umfassen und
das von der zweiten Antenne gesendete Pilotsymbol eine Frequenz aufweist, die bezüglich des Pilotsymbols, das von der ersten Antenne gesendet wird, verschoben ist,
**dadurch gekennzeichnet, dass**
das von der ersten Antenne gesendete Pilotsymbol erhalten wird durch

$$X_p^0[n] = diag\{\exp\left(j\varphi_0[n]\right) \cdot \exp\left(-\mathrm{j}2\pi k_p[n]t_0[n]/K\right)\}$$

und das von der zweiten Antenne gesendete Pilotsymbol erhalten wird durch

$$X_p^1[n] = diag\{\exp\left(j\varphi_1[n]\right) \cdot \exp\left(-j2\pi k_p[n](t_0[n] + K_{offset}/K)\right)\}$$

wobei $k_p(n)$ ein Vektor mit Indices von Pilotzellen in den n-ten Pilotsymbolen ist, $t_0(n)$ eine Phasenverschiebung im Bereich [0, K-1] ist, $K_{offset}$ ein freier Parameter ist, $K$ die Anzahl von Unterträgern ist und $\varphi_0, \varphi_1$ gleichmäßig verteilte Phasen im Bereich [0, $2\pi$] sind.

6. Sendeverfahren nach Anspruch 5, wobei $K_{offset}$ gleich oder größer als die Schutzintervalllänge ist.

7. Empfangsverfahren zum Empfangen von mindestens einem OFDM-Pilotsymbol (42, 43), **dadurch gekennzeichnet, dass**

das Pilotsymbol von mindestens zwei Antennen (11, 12) gesendet wird, und das von der ersten Antenne gesendete Pilotsymbol erhalten wird durch

$$X_p^0[n] = diag\{\exp{(j\varphi_0[n])} \cdot \exp{(-j2\pi k_p[n]t_0[n]/K)}\}$$

und das von der zweiten Antenne gesendete Pilotsymbol erhalten wird durch

$$X_p^1[n] = diag\{\exp{(j\varphi_1[n])} \cdot \exp{(-j2\pi k_p[n](t_0[n] + K_{offset}/K)}\}$$

wobei $k_p(n)$ ein Vektor mit Indices von Pilotzellen in den n-ten Pilotsymbolen ist, $t_0[n]$ eine Phasenverschiebung im Bereich [0, K-1] ist, $K_{offset}$ ein freier Parameter ist, $K$ die Anzahl von Unterträgern ist und $\varphi_0, \varphi_1$ gleichmäßig verteilte Phasen im Bereich [0, $2\pi$] sind, und
wobei das Empfangsverfahren einen Kanalschätzungsschritt umfasst, wobei die Kanalschätzung nur über eine Frequenzinterpolation erhalten wird.

**Revendications**

1. Emetteur (10) ayant une pluralité M d'antennes pour transmettre une pluralité de symboles OFDM,
dans lequel les symboles OFDM comprennent une pluralité de symboles pilotes (42, 43) qui sont utilisés dans un récepteur pour estimer des caractéristiques de canal, et dans lequel la pluralité M d'antennes comprend au moins une première et une seconde antennes (11, 12), et
le symbole pilote transmis par la seconde antenne présente un décalage de phase par rapport au symbole pilote transmis par la première antenne,
**caractérisé en ce que**
le symbole pilote transmis par la première antenne est obtenu par

$$X_P^0[n] = diag\{\exp(j\varphi_0[n]) \cdot \exp(-j2\pi k_P[n]t_0[n]/K)\}$$

et le symbole pilote transmis par la seconde antenne est obtenu par

$$X_P^1[n] = diag\{\exp(j\varphi_1[n]) \cdot \exp(-j2\pi k_P[n](t_0[n] + K_{offset})/K)\}$$

dans lequel $k_p(n)$ est un vecteur avec des indices de cellules pilotes dans les nièmes symboles OFDM, $t_0[n]$ est un décalage de phase dans la plage [0, K-1], $K_{offset}$ est un paramètre libre, $K$ est le nombre de sous-porteuses, et $\varphi_0, \varphi_1$ sont des phases uniformément réparties dans la plage [0, $2\pi$].

2. Emetteur selon la revendication 1, dans lequel le $K_{offset}$ est égal ou supérieur à la longueur d'intervalle de garde.

3. Récepteur (30) pour recevoir au moins un symbole pilote OFDM (42, 43), **caractérisé en ce que**
le symbole pilote est transmis par au moins deux antennes (11, 12), et le symbole pilote transmis par la première antenne est obtenu par

$$X_P^0[n] = diag\{\exp(j\varphi_0[n]) \cdot \exp(-j2\pi k_P[n]t_0[n]/K)\}$$

et le symbole pilote transmis par la seconde antenne est obtenu par

$$X_P^1[n] = diag\{\exp(j\varphi_1[n]) \cdot \exp(-j2\pi k_P[n](t_0[n] + K_{offset})/K)\}$$

dans lequel $k_p(n)$ est un vecteur avec des indices de cellules pilotes dans les nièmes symboles OFDM, $t_0[n]$ est un décalage de phase dans la plage [0, K-1], $K_{offset}$ est un paramètre libre, $K$ est le nombre de sous-porteuses, et $\varphi_0$, $\varphi_1$ sont des phases uniformément réparties dans la plage [0, 2π], et
dans lequel le récepteur est configuré pour calculer une estimation de canal via uniquement une interpolation de fréquence.

4. Système de transmission comprenant l'émetteur selon l'une quelconque des revendications 1 ou 2 et le récepteur selon la revendication 3.

5. Procédé de transmission pour transmettre une pluralité de symboles OFDM au moyen d'une pluralité de M antennes, dans lequel les symboles OFDM comprennent une pluralité de symboles pilotes (42, 43) qui sont utilisés dans un récepteur pour estimer des caractéristiques de canal, et dans lequel la pluralité M d'antennes comprend au moins une première et une seconde antennes (11, 12), et
le symbole pilote transmis par la seconde antenne présente un décalage de fréquence par rapport au symbole pilote transmis par la première antenne, **caractérisé en ce que**
le symbole pilote transmis par la première antenne est obtenu par

$$X_P^0[n] = diag\{\exp(j\varphi_0[n]) \cdot \exp(-j2\pi k_P[n]t_0[n]/K)\}$$

et le symbole pilote transmis par la seconde antenne est obtenu par

$$X_P^1[n] = diag\{\exp(j\varphi_1[n]) \cdot \exp(-j2\pi k_P[n](t_0[n] + K_{offset})/K)\}$$

dans lequel $k_p(n)$ est un vecteur avec des indices de cellules pilotes dans les nièmes symboles OFDM, $t_0[n]$ est un décalage de phase dans la plage [0, K-1], $K_{offset}$ est un paramètre libre, $K$ est le nombre de sous-porteuses, et $\varphi_0$, $\varphi_1$ sont des phases uniformément réparties dans la plage [0, 2π].

6. Emetteur selon la revendication 5, dans lequel le $K_{offset}$ est égal ou supérieur à la longueur d'intervalle de garde.

7. Procédé de réception pour recevoir au moins un symbole pilote OFDM (42, 43), **caractérisé en ce que**
le symbole pilote est transmis par au moins deux antennes (11, 12), et le symbole pilote transmis par la première antenne est obtenu par

$$X_P^0[n] = diag\{\exp(j\varphi_0[n]) \cdot \exp(-j2\pi k_P[n]t_0[n]/K)\}$$

et le symbole pilote transmis par la seconde antenne est obtenu par

$$X_P^1[n] = diag\{\exp(j\varphi_1[n]) \cdot \exp(-j2\pi k_P[n](t_0[n] + K_{offset})/K)\}$$

dans lequel $k_p(n)$ est un vecteur avec des indices de cellules pilotes dans les nièmes symboles OFDM, $t_0[n]$ est un décalage de phase dans la plage [0, K-1], $K_{offset}$ est un paramètre libre, $K$ est le nombre de sous-porteuses, et $\varphi_0$, $\varphi_1$ sont des phases uniformément réparties dans la plage [0, 2π], et
dans lequel le procédé de réception comprend une étape d'estimation de canal dans laquelle l'estimation de canal est obtenue via uniquement une interpolation de fréquence.

# Fig. 1

# Fig. 2

# Fig. 3

# Fig. 4

Fig. 5

**EP 2 747 332 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2164198 A